# EUROPEAN PATENT APPLICATION

(11) **EP 1 246 295 A2**
(43) Date of publication of application: **02.10.2002**
(21) Application number: 02006699.9
(22) Date of filing: 27.03.2002
(51) Int. Cl.: H01Q 1/24, H04B 1/38

(54) **Mobile communication terminal**

(30) Priority: 28.03.2001 JP 2001093871
(71) Applicant: Kabushiki Kaisha Toshiba, Tokyo (JP)
(72) Inventor: Amano, Takashi, Minato-ku, Tokyo 105-8001 (JP); Chiba, Norimichi, Minato-ku, Tokyo 105-8001 (JP); Suzuki, Hiromichi, Minato-ku, Tokyo 105-8001 (JP); Iwasaki, Hisao, Minato-ku, Tokyo 105-8001 (JP)
(74) Representative: HOFFMANN - EITLE

(57) **Abstract**

A cellular phone includes two antennas, namely, a first antenna (30) made as a rod antenna and a second antenna (40) made as a helical antenna. A circuit board (20) is housed in the casing (10) of the cellular phone. The circuit board (20) has an extended board portion (22) which is projected upward from the upper edge and which corresponds in position to the antennas (30, 40). An impedance matching circuit, which is made as a folded wiring pattern (70), and a feeding pad (61) are formed on the extended board portion of the circuit board.

## Description

The present invention relates to mobile communication terminals provided with antennas, such as cellular phones, personal digital assistants, etc.

In general, a small-sized mobile communication terminal (an example of which is a cellular phone or a personal digital assistant) comprises two antennas so that the size of the communication terminal can be small and the communication terminal has a desired receiving characteristic. The first antenna is a rod antenna which is extendable and is housed within a casing of the terminal. On the other hand, the second antenna is a helical antenna and is fixed to the upper end of the first antenna. In a communication mode, the first antenna is pulled out from the casing, and communication is performed using the first antenna. In an idle mode, the first antenna is housed within the casing, and incoming signals are received by the second antenna. With this structure, the first antenna enables highly sensitive communication in the communication mode, and only the second antenna is sticked out from the casing in the idle mode. Hence, the communication terminal is improved in portability.

The recently-developed mobile communication terminals of this type include a communication terminal that comprises a camera and is provided with an image transmitting function. By using the camera, the communication terminal serves as a video phone, i.e., a device that can execute television-telephone communication. During the video phone communication, the user talks with the other party while looking at the face image shown on the display unit on the front side of the communication terminal. Generally, therefore, the camera is provided on the front side of the upper end of the casing.

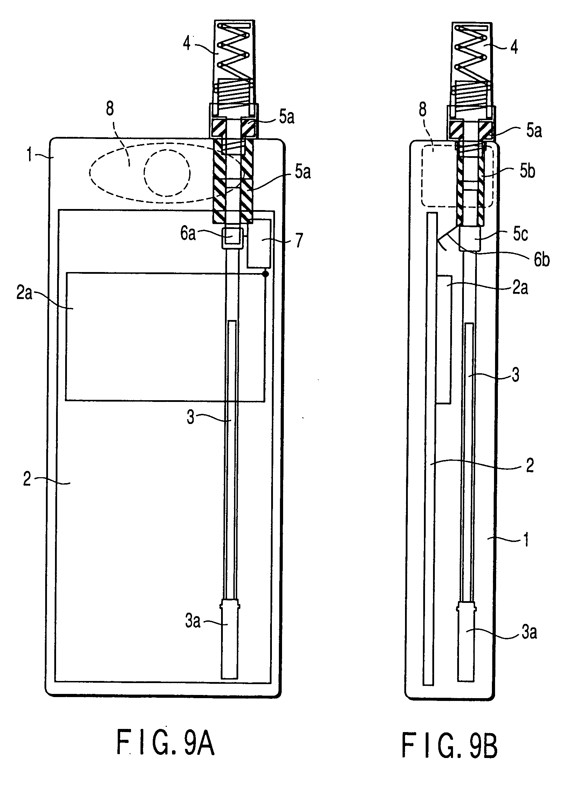

FIGS. 9A and 9B show a conventional cellular phone provided with a camera. In FIG. 9A a partially-sectional front view is shown, and partially-sectional side view is shown in FIG. 9B. Referring to FIGS. 9A and 9B, a camera 8 is located in the upper region of the casing 1, and a circuit board 2 is located at a position away from the camera 8. A variety of circuits, including a radio communication circuit 2a, are formed on the circuit board 2. A feeding pad 6a used for feeding power to the antennas 3 and 4 (to be described later) and a matching circuit 7 used for the impedance matching between the radio communication circuit 2a and the antennas 3 and 4, are also formed on the circuit board 2.

An antenna device is located in one side region of the casing 1. The antenna device includes a first antenna 3, which is a rod antenna, and a second antenna 4, which is a helical antenna. The first and second antennas are connected together by means of a coupling portion formed of resin. The first and second antennas 3 and 4 are supported at the upper end of the casing 1 by means of first and second holders 5a and 5b. The first and second antennas 3 and 4 are movable in the vertical direction. FIGS. 9A and 9B show a state where the first antenna 3 is housed within the casing 1. In this state, the element holder 5c of the second antenna 4 is electrically connected to the feeding pad 6a by way of the feeding elastic tongue 6b. On the other hand, when the first antenna 3 is pulled upward from the casing 1, the stopper 3a of the first antenna 3 is electrically connected to the feeding pad 6a by way of the feeding elastic tongue 6b. In this manner, the first and second antennas 3 and 4 are selectively connected to the radio communication circuit 2a and become available thereby.

In the conventional mobile communication terminal, however, the circuit board 2 has to be shifted downward inside the casing 1 so as to avoid the installation region of the camera 8. This structure inevitably lengthens the feeding paths extending from the feeding pad 6a of the circuit board 2 to the antennas 3 and 4. As a result, the signal loss in the feeding paths increases and undesired radiation from the feeding paths also increases. In addition, the stopper 3a of the first antenna 3 and the element holder 5c of the second antenna 4 are inevitably long. Since the antenna device is therefore long size, the antenna device cannot be easily housed inside the casing 1. Moreover, since the circuit board 2 has to be shifted downward, the increased installation space of the circuit board 2 is required. This also increases the overall size of the casing 1. However, in order for the terminal to be small-sized and attractive in design, an increase in the size of the terminal is not desired. Therefore, the circuit board has to be small in size and the mounting area has to be narrow. Since high-level of mounting technology is required, a cost increase is inevitable. Furthermore, since various components have to be changed in size and shape, accordingly, this further increases the cost.

The present invention has been conceived in consideration of the above circumstances, and an object of the present invention is to provide a mobile communication terminal which can contain a camera or another kind of module that must be located at a specific position, without giving rise to degradation in antenna characteristics, an increase in the size of the casing or an increase in the manufacturing cost.

To achieve this object, according to an aspect of the present invention provides a mobile communication terminal comprising:
a circuit board configured to have at least a radio communication circuit and be housed in a casing of the terminal;
an antenna configured to include a radiating portion sticked out of the casing and a feeding portion located inside the casing;
an extended board portion configured to be extended in a direction in which the antenna is extended and be set in a position on the circuit board which is opposed to a position of the antenna;
a matching circuit configured to implement impedance-matching between the radio communication circuit and the antenna and be located on the extended board portion; and
a feeding circuit configured to feed high-frequency power to the feeding portion of the antenna, the high-frequency power being output from the radio communication circuit via the matching circuit.

According to another aspect of the present invention provides a mobile communication terminal comprising:
a circuit board configured to have at least a radio communication circuit and be housed in a casing of the terminal;
an antenna configured to include a radiating portion located out of a upper portion of the casing and a feeding portion located inside the casing;
an extended board portion configured to be extended in a direction in which the antenna is extended and be set in a position on the circuit board which is opposed to a position of the antenna;
a matching circuit configured to implement impedance-matching between the radio communication circuit and the antenna and be located on the extended board portion; and
a feeding circuit configured to feed high-frequency power to the feeding portion of the antenna, the high-frequency power being output from the radio communication circuit via the matching circuit.

According to yet another aspect of the present invention provides a unit for use in a mobile communication terminal including an antenna with a radiating portion sticked out of a casing of the terminal and a feeding portion located inside the casing, comprising:
a circuit board configured to have at least a radio communication circuit and be housed in a casing of the terminal;
an extended board portion configured to be extended in a direction in which the antenna is extended and be set in a position on the circuit board which is opposed to a position of the antenna;
a matching circuit configured to implement impedance-matching between the radio communication circuit and the antenna and be located on the extended board portion; and
a feeding circuit configured to feed high-frequency power to the feeding portion of the antenna, the high-frequency power being output from the radio communication circuit via the matching circuit.

This summary of the invention does not necessarily describe all necessary features so that the invention may also be a sub-combination of these described features.

The invention can be more fully understood from the following detailed description when taken in conjunction with the accompanying drawings, in which:
FIG. 1A shows partially-sectional front of the major portion of a mobile communication terminal according to the first embodiment of the present invention.
FIG. 1B shows a side view of the major portion of a mobile communication terminal according to the first embodiment of the present invention.
FIG. 2A shows partially-sectional front of the major portion of a mobile communication terminal according to the second embodiment of the present invention.
FIG. 2B shows a side view of the major portion of a mobile communication terminal according to the second embodiment of the present invention.
FIG. 3A shows partially-sectional front of the major portion of a mobile communication terminal according to the third embodiment of the present invention.
FIGS. 3B and 3C show side views of the major portion of a mobile communication terminal according to the third embodiment of the present invention.
FIG. 4A shows partially-sectional front of the major portion of a mobile communication terminal according to the fourth embodiment of the present invention.
FIGS. 4B and 4C show side views of the major portion of a mobile communication terminal according to the fourth embodiment of the present invention.
FIG. 5A shows partially-sectional front of the major portion of a mobile communication terminal according to the fifth embodiment of the present invention.
FIGS. 5B and 5C show side views of the major portion of a mobile communication terminal according to the fifth embodiment of the present invention.
FIG. 6 is an antenna device of the mobile communication terminal shown in FIGS. 5A, 5B and 5C.
FIG. 7 is a perspective view of a second antenna holder of the antenna device shown in FIG. 6.
FIG. 8 is a front view of the second antenna holder shown in FIG. 7.
FIG. 9A shows partially-sectional front of the major portion of a conventional mobile communication terminal.
FIG. 9B shows a side view of the major portion of a conventional mobile communication terminal.

### (First Embodiment)

The first embodiment of the present invention provides a cellular phone comprising two antennas, namely, a first antenna made as a rod antenna and a second antenna made as a helical antenna. A circuit board is housed in the casing of the cellular phone. The circuit board has an extended board portion which is extended upward from the upper edge and which corresponds in position to the antennas. An impedance matching circuit, which is made as a folded wiring pattern, and a feeding pad are formed on the extended board portion of the circuit board.

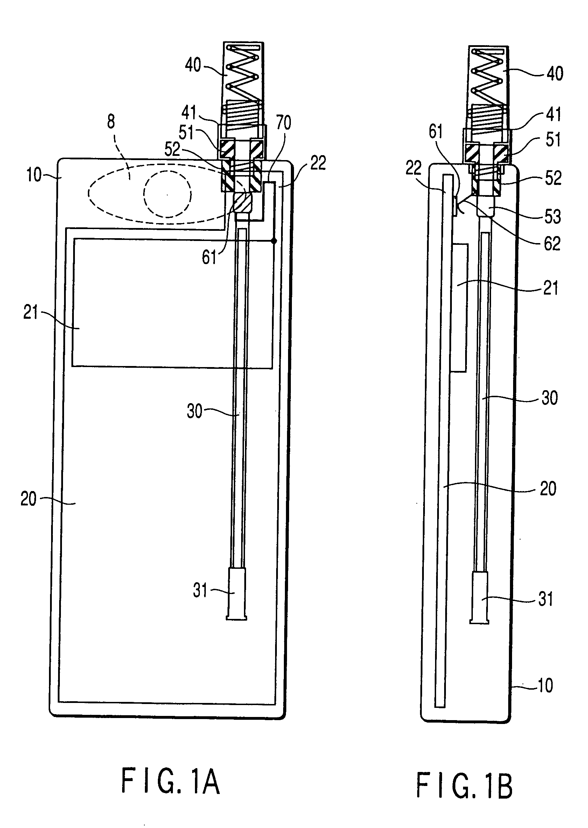

FIGS. 1A and 1B show a cellular phone which is the first embodiment of the mobile communication terminal of the present invention. A partially-sectional front view is shown in FIG. 1A, and a partially-sectional side view is shown in FIG. 1B.

Referring to FIG. 1A, a camera 8, made of a CCD (charge-coupled device) or a CMOS (complementary mental-oxide semiconductor device), is housed in the upper region of a casing 10. A circuit board 20 is housed in the casing 10. The circuit board 20 is shifted downward and located away from the camera 8. A variety of circuits, such as a radio communication circuit 21, are formed on the circuit board 20.

An antenna device is located in one side region of the casing 10. The antenna device includes a first antenna 30, which is a rod antenna, and a second antenna 40, which is a helical antenna. The first antenna 30 is made of a bendable antenna element and formed of a nickel titanium alloy, for example. A stopper 31, formed of a metallic material, such as aluminum, is at the lower end of the first antenna 30. The stopper 31 functions as a stopper when the first antenna 30 is pulled upward from the upper end of the casing 10. In addition, the first antenna 30 has a function of transmitting high-frequency signals from the radio communication circuit 21, receiving downward high-frequency signals form a base station.

The second antenna 40 is made of an antenna element formed by spirally winding a copper wire. This antenna element is covered with a cap formed of ABS resin, for example. An element holder 53, formed of aluminum or another kind of metal, is connected to the lower end of the antenna element. The element holder 53 has a function of receiving high-frequency signals supplied from the radio communication circuit 21. The element holder 53 is connected to the upper end of the first antenna 30 through a coupling portion formed of nylon resin, so that the first antenna 30 and the second antenna 40 are electrically insulated from each other and yet formed in a monolithic manner.

The first and second antennas 30 and 40 are connected to the upper end of the casing 10 by means of an antenna support member in such a manner that they are movable in the vertical direction. The antenna support member is made up of first and second antenna holders 51 and 52, both antenna holders 51 and 52 formed of resin. Each of the first and second antenna holders 51 and 52 has an insertion hole in the center thereof, and the element holder 53 of the second antenna and the first antenna 30 are inserted through the insertion hole. The first antenna holder 51 is screwed to an antenna fixing member 41 provided at the upper end of the casing 10, from outside the casing 10. The second antenna holder 52 is connected to the first antenna holder 51 inside the casing 10.

The circuit board 20 has an extended portion 22 which is extended upward from the upper edge and which corresponds in position to the antenna device. A feeding pad 61 and an impedance matching circuit 70 are formed on the extended board portion 22. As shown in FIG. 1A, the impedance matching circuit 70 is a folded wiring pattern, which is folded in the longitudinal direction of the antennas 30 and 40. A feeding elastic tongue 62 is fixed at its bottom end to the second antenna holder 52. Through this feeding elastic tongue 62, the feeding pad 61 is electrically connected to either the stopper 31 of the first antenna 30 or the element holder 53 of the second antenna 40.

With the structure described above, when the first antenna 30 is housed within the casing 10, the feeding elastic tongue 62 electrically connects the element holder 53 of the second antenna 40 to the feeding pad 61 formed on the extended board portion 22, as shown in FIG. 1B. In this state, a high-frequency signal output from the radio communication circuit 21 is supplied to the second antenna by way of the folded wiring pattern of the impedance matching circuit 70. As a result, the second antenna 40 is excited and serves as an antenna.

When the second antenna 40 is pulled upward, the first antenna 30 comes out from inside the casing 10. In this state, the feeding elastic tongue 62 electrically connects the stopper 31 of the first antenna 30 to the feeding pad 61 formed on the extended board portion 22. In this state, a high-frequency signal output from the radio communication circuit 21 is supplied to the first antenna 30 by way of the folded wiring pattern of the impedance matching circuit 70. As a result, the first antenna 30 is excited and serves as an antenna.

The feeding pad 61 is formed on the extended board portion 22 of the circuit board 20. In other words, the feeding pad 61 is located at a position close to the upper end of the casing 10. Hence, in comparison with the conventional structure shown in FIGS. 9A and 9B, the feed point from which power is fed to the second antenna 40 is close to the upper end of the casing 10, i.e., to the second antenna 40. For this reason, the element holder 53 providing the feed point need not be long. Similarly, the stopper 31 providing the feed point from which power is fed to the first antenna need not be long. Since the feeding paths from the feeding pad 61 to the first and second antennas 30 and 40 are short, the signal loss on the feeding paths and the undesired radiation from the feeding paths are suppressed. Hence, a high antenna gain and a high efficiency are attained.

As described above, the stopper 31 of the first antenna and the element holder 53 of the second antenna can be short. Since the overall size of the antenna device can be reduced, the antenna device can be housed within the casing 10, with no need to increase: the size of the casing 10.

Since the folded wiring pattern 70 of the matching circuit and the feeding pad 61 are formed on the extended board portion 22, a sufficient wide mounting area is ensured with no need to increase the size of the circuit board 20. The casing 10 need not be large, high-density packing technology is not required, and component replacement need not be executed. As a result, the manufacturing cost does not increase. Moreover, it is possible to provide a cellular phone of a desired size and design.

The structure wherein the feed point is close to the upper end of the casing 10 is advantageous because the adverse effects the human body may have on the antenna characteristics are suppressed. That is, reliable antenna characteristics are maintained in the environment of actual use.

According to the first embodiment, the impedance matching circuit 70 is made as a folded wiring pattern. Since this pattern reverses the phase relationships of opposing patterns, the radiation from the matching circuit can be suppressed, and improved antenna characteristics are ensured. In addition, since the impedance matching circuit 70 is made as a printed pattern, the number of structural elements required is small, thus contributing to a low manufacturing cost.

### (Second Embodiment)

The second embodiment of the present invention provides a cellular phone comprising two antennas, namely, a first antenna made as a rod antenna and a second antenna made as a helical antenna. A circuit board is housed in the casing of the cellular phone. The circuit board has an extended portion which is extended upward from the upper edge and which corresponds in position to the antennas. The second embodiment is featured in that a feeding pad is formed on one side of the extended board portion, and a folded wiring pattern functioning as an impedance matching circuit is formed on both sides of the extended board portion by utilization of through holes.

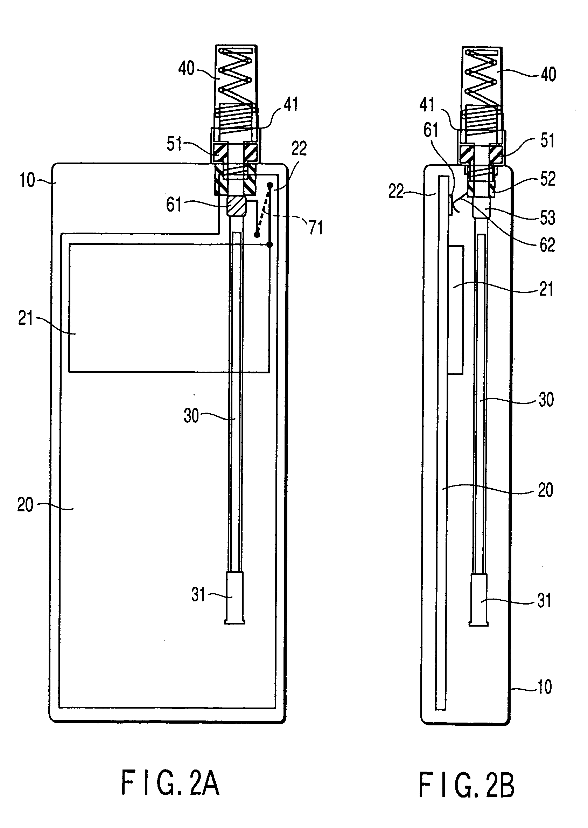

FIGS. 2A and 2B show a cellular phone which is the second embodiment of the mobile communication terminal of the present invention. A partially-sectional front view is shown in FIG. 2A, and a partially-sectional side view is shown in FIG. 2B. In FIGS. 2A and 2B, the same reference numerals as used in FIG. 1A and 1B denote similar or corresponding structural elements, and a detailed description of such elements will be omitted.

On the obverse and reverse sides of the extended board portion 22, which is extended from the upper end of the circuit board 20, a folded wiring pattern 71 is formed, using through holes. This folded wiring pattern 71 functions as an impedance matching circuit.

With this structure, the mounting area required for the impedance matching circuit can be decreased. Hence, a matching circuit having satisfactory performance can be provided even if the extended board portion 22 is restricted in area.

### (Third Embodiment)

The third embodiment of the present invention provides a cellular phone comprising two antennas, namely, a first antenna made as a rod antenna and a second antenna made as a helical antenna. A circuit board is housed in the casing of the cellular phone. The circuit board has an extended portion which is extended upward from the upper edge and which corresponds in position to the antennas. A feeding pad is formed on one side of the extended board portion, and a folded wiring pattern functioning as an impedance matching circuit is formed on both sides of the extended board portion by utilization of through holes. The third embodiment is featured in that the feeding pad is coupled with the feed points of the first and second antennas through capacitive coupling.

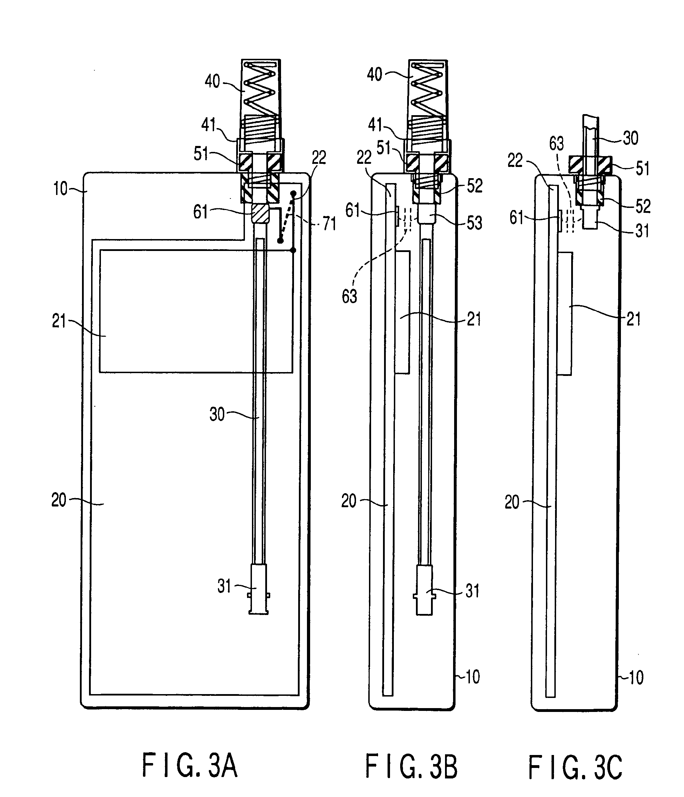

FIGS. 3A, 3B, and 3C show a cellular phone which is the third embodiment of the mobile communication terminal of the present invention. A partially-sectional front view is shown in FIG. 3A, and a partially-sectional side view is shown in FIGS. 3B and 3C. In FIGS. 3A, 3B, and 3C, the same reference numerals as used in FIGS. 2A and 2B denote similar or corresponding structural elements, and a detailed description of such elements will be omitted.

According to the third embodiment, the receiving positions of the circuit board 20 and the antenna device are determined in such a manner that the feeding pad 61 formed on the extended board portion 22 is coupled to both the stopper 31 of the first antenna 30 and the element holder 53 of the second antenna 40, with a predetermined coupling capacity 63 maintained.

With this structure, when the first antenna 30 is housed within the casing 10, the element holder 53 of the second antenna 40 and the feeding pad 61 formed on the extended board portion 22 are coupled in the coupling capacity 63, as shown in FIG. 3B. In this state, a high-frequency signal output from the radio communication circuit 21 is supplied to the second antenna 40 by way of the folded wiring pattern 71 (which uses through holes and functions as an impedance matching circuit) and the coupling capacity 63. As a result, the second antenna 40 is excited and serves as an antenna.

When the second antenna 40 is pulled upward, the first antenna 30 comes out from inside the casing 10. In this state, the stopper 31 of the first antenna 30 and the feeding pad 61 formed on the extended board portion 22 are coupled in the coupling capacity 63. In this state, a high-frequency signal output from the radio communication circuit 21 is supplied to the first antenna 30 by way of the folded wiring pattern 71 and the coupling capacity 63. As a result, the first antenna 30 is excited and serves as an antenna.

According to the third embodiment, power is supplied to both first and second antennas 30 and 40 through the coupling capacity 63. Since the value of Q factor of the antenna can be reduced, the antenna device is allowed to have a broad band characteristic.

The Q factor is a number indicating energy characteristic as a function of frequency. If the Q factor is high, a band of the energy characteristic is narrow in a frequency region. In other words, the Q factor having a large value indicates narrow band characteristic in energy as a function of frequency. If the Q factor is low, a band of the energy characteristic is broad in a frequency region. In other words, the Q factor having a small value indicates broad band characteristic in energy as a function of frequency.

In a viewer-type cellular phone incorporating a camera, it is necessary to enhance the gain as measured in a horizontal plane of the viewer. To satisfy this, the first and second antennas 30 and 40 are designed to have a length of λ/2, and the feeding path including the folded wiring pattern 71 (which utilizes through holes and functions as a matching circuit) is designed to have a length of λ/4. Accordingly, the antenna device operates in a similar manner to that of a dipole antenna, and the gain as measured in a horizontal plane of the viewer can be enhanced. The length of the antenna which need be extracted from the casing can be less than λ/2, because of the coupling capacity 63. Therefore, the length of the first antenna 30 can be reduced. In comparison with the conventional structure shown in FIGS. 9A and 9B, the needed volume in the casing which the first antenna 30 is housed may be smaller. In this case, matching is attained by setting the input/output impedance of the radio communication circuit 21 at about 50Ω. Symbol λ denotes a wavelength of waves transmitted and received by the mobile communication terminal.

### (Fourth Embodiment)

The fourth embodiment of the present invention provides a cellular phone comprising two antennas, namely, a first antenna made as a rod antenna and a second antenna made as a helical antenna. A circuit board is housed in the casing of the cellular phone. The circuit board has an extended portion which is extended upward from the upper edge and which corresponds in position to the antennas. A feeding pad is formed on one side of the extended board portion, and a folded wiring pattern functioning as an impedance matching circuit is formed on both sides of the extended board portion by utilization of through holes. The fourth embodiment is featured in that the feeding pad is connected to the feed points of the first and second antennas through the capacitive coupling by using a feeding elastic tongue.

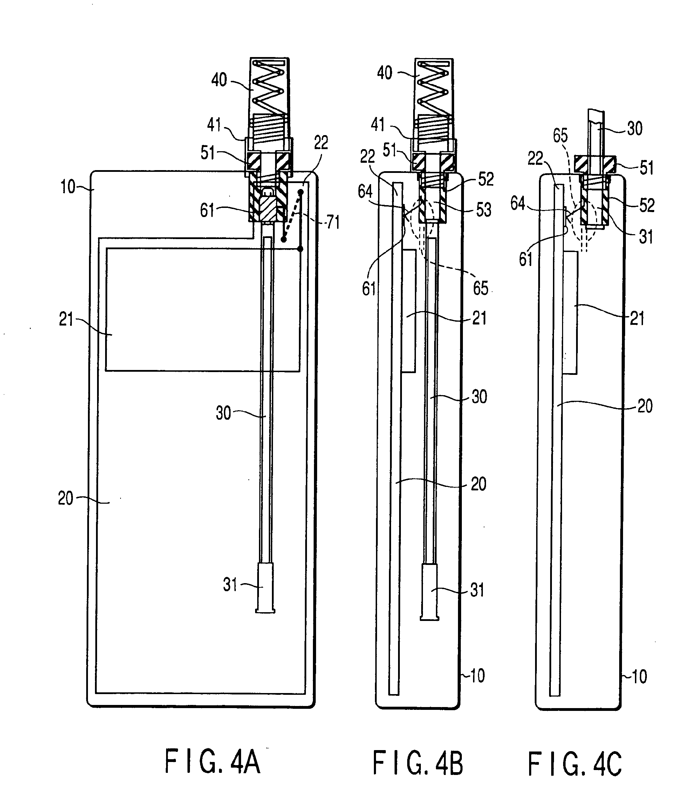

FIGS. 4A, 4B and 4C show a cellular phone which is the fourth embodiment of the mobile communication terminal of the present invention. A partially-sectional front view is shown in FIG. 4A, and a partially-sectional side view is shown in FIGS. 4B and 4C. In FIGS. 4A, 4B and 4C, the same reference numerals as used in FIGS. 3A, 3B and 3C denote similar or corresponding structural elements, and a detailed description of such elements will be omitted.

According to the fourth embodiment, the second antenna holder 52 is a dielectric member, and the bottom end of a feeding elastic tongue 64 is fixed to the second holder 52 in a monolithic manner such that the bottom end is located away from the antenna insertion hole by a predetermined distance. This distance is determined so that the bottom end of the feeding elastic tongue 64 is coupled to either the stopper 31 of the first antenna 30 or the element holder 53 of the second antenna 40 in a coupling capacity 65 of a predetermined value when the stopper 31 or the element holder 53 is inserted into the antenna insertion hole. The top end of the feeding elastic tongue 64 is in electrical contact with a feeding pad 61 formed on the extended board portion 22 of the circuit board 20.

With this structure, when the first antenna 30 is housed within the casing 10, the element holder 53 of the second antenna 40 and the feeding pad 61 formed on the extended board portion 22 are connected by the feeding elastic tongue 64 and coupled in the coupling capacity 65, as shown in FIG. 4B. In this state, a high-frequency signal output from the radio communication circuit 21 is supplied to the second antenna 40 by way of the folded wiring pattern 71 (which uses through holes and functions as an impedance matching circuit), the feeding elastic tongue 64 and the coupling capacity 65. As a result, the second antenna 40 is excited and serves as an antenna.

When the second antenna 40 is pulled upward, the first antenna 30 comes out from inside the casing 10. In this state, the stopper 31 of the first antenna 30 and the feeding pad 61 formed on the extended board portion 22 are electrically connected by the feeding elastic tongue 64 and coupled in the coupling capacity 65. In this state, a high-frequency signal output from the radio communication circuit 21 is supplied to the first antenna 30 by way of the folded wiring pattern 71, the feeding elastic tongue 64, and the coupling capacity 65. As a result, the first antenna 30 is excited and serves as an antenna.

Where the circuit board 20 is away from the feed points of the antennas 30 and 40 more than a certain distance, the feeding pad 61 may not be coupled with the feed points in a desired coupling capacity. Even in this case, the use of the feeding elastic tongue 64 enables capacitive coupling between the feeding pad 61 and the first and second antennas 30 and 40 (i.e., the coupling between the feeding pad 61 and the stopper 31 ,and the coupling between the feeding pad 61 and the element holder 53). In addition, since the feeding elastic tongue 64 is fixed to the second antenna holder 52 in a monolithic manner, the value of the capacitive coupling is stable.

### (Fifth Embodiment)

The fifth embodiment of the present invention provides a cellular phone comprising two antennas, namely, a first antenna made as a rod antenna and a second antenna made as a helical antenna. A circuit board is housed in the casing of the cellular phone. The circuit board has an extended portion which is extended upward from the upper edge and which corresponds in position to the antennas. A feeding pad is formed on one side of the extended board portion, and a folded wiring pattern functioning as an impedance matching circuit is formed on both sides of the extended board portion via through holes which connect one side and another side of the extended board portion. The fifth embodiment is featured in that the feeding pad is connected to the feed points of the first and second antennas through capacitive coupling by using a feeding elastic tongue which is bended in parallel to a direction in which the antenna is extended.

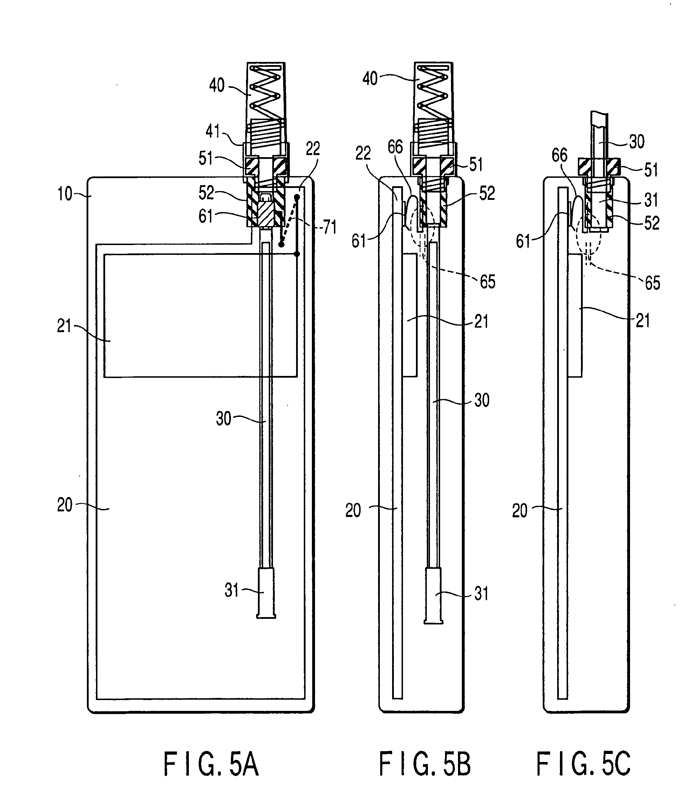

FIGS. 5A, 5B and 5C show a cellular phone which is the fifth embodiment of the mobile communication terminal of the present invention. A partially-sectional front view is shown in FIG. 5A, and a partially-sectional side view is shown in FIGS. 5B and 5C. In FIGS. 5A, 5B and 5C, the same reference numerals as used in FIGS. 3A, 3B and 3C denote similar or corresponding structural elements, and a detailed description of such elements will be omitted.

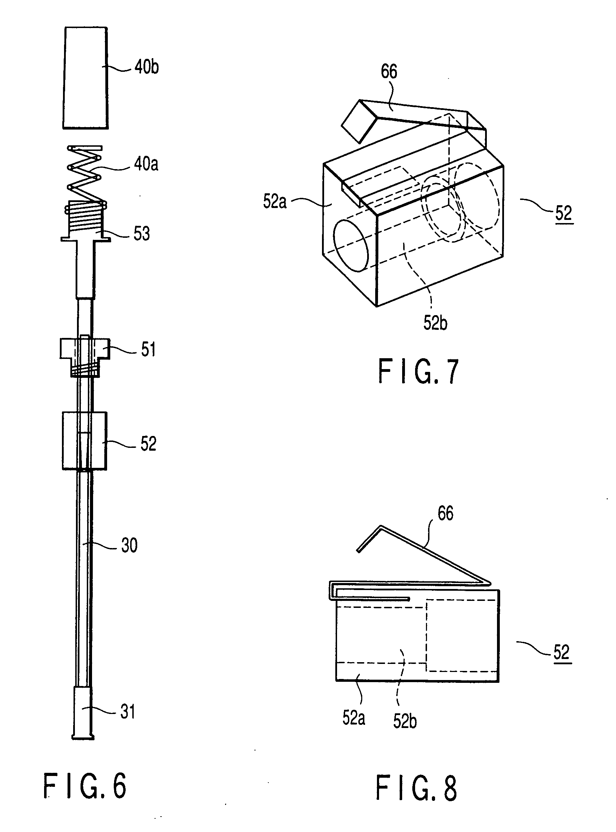

As shown in FIG. 6, the first antenna 30 comprises a stopper 31 at the lower end, and the second antenna 40 comprises a helical antenna element 40a, the lower end of which is connected to an element holder 53. The first and second antennas 30 and 40 are connected together by means of a connecting member formed of resin. In this state, the first and second antennas 30 and 40 are attached to the casing 10 by means of two antenna holders 51 and 52.

As shown in FIGS. 7 and 8, the second antenna holder 52 is a rectangular dielectric block 52a having an antenna insertion hole 52b in the center. The first antenna 30 is inserted in the antenna insertion hole 52b in such a manner as to be vertically movable.

The bottom end of a feeding elastic tongue 66, which is bended, is attached to one side surface of the second antenna holder 52 in a monolithic manner such that the bottom end is located away from the antenna insertion hole 52a by a predetermined distance. This distance is determined so that the bottom end of the feeding elastic tongue 66 is coupled with either the stopper 31 of the first antenna 30 or the element holder 53 of the second antenna 40 in a coupling capacity 65 of a predetermined value when the stopper 31 or the element holder 53 is inserted into the antenna insertion hole. The top end of the feeding elastic tongue 66 is in electrical contact with a feeding pad 61 formed on the extended board portion 22 of the circuit board 20.

Instead of the feeding elastic tongue 66, a spring contactor may be used, the spring contactor which electrically connects the element holder 53 and the feeding pad 61 by a touching portion according to mechanical power of the spring included in the spring contactor. The spring is housed in a small casing, the bottom end of which is attached to one side surface of the second antenna holder 52 in a monolithic manner such that the bottom end is located away from the antenna insertion hole 52a by a predetermined distance. The other end of the spring is connected to the touching portion which is made of metal materials. The touching portion may touch the feeding pad 61.

With this structure, when the first antenna 30 is housed within the casing 10, the element holder 53 of the second antenna 40 and the feeding pad 61 formed on the extended board portion 22 are connected by the feeding elastic tongue 66 and coupled in the coupling capacity 65, as shown in FIG. 5B. In this state, a high-frequency signal output from the radio communication circuit 21 is supplied to the second antenna 40 by way of the folded wiring pattern 71 (which uses through holes and functions as an impedance matching circuit), the feeding elastic tongue 66 and the coupling capacity 65. As a result, the second antenna 40 is excited and serves as an antenna.

When the second antenna 40 is pulled upward, the first antenna 30 comes out from inside the casing 10. In this state, the stopper 31 of the first antenna 30 and the feeding pad 61 formed on the extended board portion 22 are electrically connected by the feeding elastic tongue 66 and coupled in the coupling capacity 65. In this state, a high-frequency signal output from the radio communication circuit 21 is supplied to the first antenna 30 by way of the folded wiring pattern 71, the feeding elastic tongue 66, and the coupling capacity 65. As a result, the first antenna 30 is excited and serves as an antenna.

Where the circuit board 20 is away from the feed points of the antennas 30 and 40 more than a certain distance, as in the fourth embodiment, the feeding pad 61 may not be coupled with the feed points through a desired coupling capacity. Even in this case, the use of the feeding elastic tongue 66 enables capacitive coupling between the feeding pad 61 and the first and second antennas 30 and 40 (i.e., the coupling between the feeding pad 61 and the stopper 31, and the coupling between the feeding pad 61 and the element holder 53). In addition, since the feeding elastic tongue 66 is fixed to the second antenna holder 52 in a monolithic manner, the capacitance of the capacitive coupling is stable.

Moreover, the feeding elastic tongue 66 is made as a bended tongue. That is, it is bended in the longitudinal direction of the antennas. With this structure, high-frequency signals have reversed phases at the opposing portions of the feeding elastic tongue 66. Hence, the radiation of radio waves from the feeding elastic tongue is suppressed, and the deterioration in the antenna characteristics is prevented, thereby allowing the antennas to fulfill their intended performance. It should be noted that the feeding elastic tongue 66 has an impedance matching function. Therefore the impedance matching circuit 71 can be simplified. Accordingly, the load of the impedance matching circuit 71 decreases. This can lead to a decrease in the extended length of the extended board portion 22.

### (Other Embodiments)

The above embodiments were described, referring to cellular phones. Needless to say, however, the present invention is applicable to portable data terminals, such as PDA (personal digital assistants), and mobile personal computers.

In each of the embodiments described above, the circuit board is housed in the casing in such a manner that the circuit board is shifted and located away from storage position of a camera. The present invention is also applicable to a case where the circuit board must be shifted and located away from the storage position of a module other than a camera.

In addition, the shape and size of the extended board portion of the circuit board, the circuit configuration of the impedance matching circuit and the structure of the antennas, can be varied in various manners without departing from the spirit of the invention.

According to the embodiments of the present invention, the feeding path from the feeding circuit of the circuit board to the antenna element is short. Since a signal loss in the feeding path and undesired radiation therefrom can be suppressed, the gain and efficiency of the antenna are high. In addition, since the antenna is short as a whole, it can be housed within the casing, with no need to increase the size of the casing. Moreover, since the matching circuit and the feeding circuit are provided on the extended board portion, the mounting area needed for the radio communication circuit can be easily secured on the circuit board. Hence, the casing need not be large, high-density mounting technology is not required, and various components need not be changed in size and shape. Accordingly, the manufacturing cost of the terminal is low. Furthermore, a mobile communication terminal having a desirable size and design can be easily provided.

According to one aspect of the present invention, the matching circuit is made of a folded-pattern line which is folded in the extended direction of the antenna (or in the opposite direction) and is folded at least once. The folded-pattern line of this structure may be formed on one side of the extended board portion as a printed pattern. With this structure, high-frequency signals reverse in phase at the folded wiring pattern when they are fed to the antenna. Hence, the radiation of the high-frequency signals decreases at the matching circuit, and improved antenna characteristics are ensured.

According to another aspect of the present invention, the matching circuit is made of a folded-pattern line which is folded in the extended direction of the antenna (or in the opposite direction) and is folded at least once. The folded-pattern line of this structure may be formed on both sides of the extended board portion as a printed pattern using a through hole. With this structure, the matching circuit, which is formed as a folded wiring pattern, can be provided on the extended board portion with comparative ease even when the area of that extended board portion is narrow.

According to more another aspect of the present invention, the feeding circuit described above is formed as a feeding pad formed on the extended board portion and facing the feeding portion of the antenna. The feeding pad is coupled with the feeding portion of the antenna by capacitive coupling. In comparison with the case where the feeding pad and the feeding portion of the antenna are electrically connected by means of a conductive portion, the capacitive-coupling structure is advantageous in that the Q factor of the antenna is small and the antenna is therefore provided with broad band characteristics.

According to yet another aspect of the present invention, the feeding circuit is made as a feeding pad formed on one side of the extended board portion, and the feeding pad and the feeding portion of the antenna are connected by means of a conductive portion that enables capacitive coupling. Where the circuit board and the feeding portion of the antenna are away from each other more than a predetermined distance, the use of only the feeding pad does not easily attain capacitive coupling between the feeding pad and the feeding portion of the antenna. Even in this case, the capacitive coupling of a desired value can be attained by adopting the structure wherein the feeding pad and the feeding portion of the antenna are located close to each other and face each other.

It is desirable that the conductive portion of the feeding circuit be folded at least once so that the conductive portion is directed in the extended direction of the antenna or in the opposite direction. Where the conductive portion is folded, high-frequency signals have reversed phases at the opposing portions of the conductive portion. Hence, the radiation of radio waves from the feeding circuit is suppressed, and the deterioration in the antenna characteristics is prevented, thereby allowing the antennas to fulfill their intended performance. It should be also noted that the conductive portion has an impedance matching function because it is folded. The impedance matching circuit can therefore be simple, and the extended board portion can be small in size.

According to another aspect of the present invention, an antenna support member formed of a dielectric material is employed for supporting the antenna on the casing, and the bottom end of the conductive portion of the feeding circuit is attached to the antenna support member in a monolithic manner. The bottom end is located away from the antenna by a predetermined distance. This structure is advantageous in that the antenna support member ensures stable capacitive coupling.

## Claims

1. A mobile communication terminal **characterized by** comprising:
a circuit board (20) configured to have at least a radio communication circuit and be housed in a casing of the terminal;
an antenna (30, 40) configured to include a radiating portion sticked out of the casing and a feeding portion located inside the casing;
an extended board portion (22) configured to be extended in a direction in which the antenna is extended and be set in a position on the circuit board which is opposed to a position of the antenna;
a matching circuit (70, 71) configured to implement impedance-matching between the radio communication circuit and the antenna and be located on the extended board portion (22); and
a feeding circuit (61, 62, 53, 31, 64, 66) configured to feed high-frequency power to the feeding portion of the antenna (30, 40), the high-frequency power being output from the radio communication circuit via the matching circuit (70, 71).

2. The terminal according to claim 1, **characterized in that** the extended board portion (22) is adjacent to the feeding portion of the antenna and is arranged in parallel to a direction in which the antenna (30, 40) is extended.

3. The terminal according to claim 1, **characterized in that** the matching circuit (70, 71) includes a folded-pattern line (70, 71) which is folded at least once in a direction in which the antenna (30, 40) is sticked out or in another direction opposite to the direction.

4. The terminal according to claim 3, **characterized in that** the folded-pattern line (70, 71) is structured as a printed pattern that is formed on one side of the extended board portion (22).

5. The terminal according to claim 3, **characterized in that** the folded-pattern line (70, 71) is structured as a printed pattern that is formed on both sides of the extended board portion (22) via at least one through hole which connects one side and another side of the extended board portion (22).

6. The terminal according to claim 3, **characterized in that** the folded-pattern line (70, 71) has a length determined based on a wavelength of a radio wave to be transmitted or received.

7. The terminal according to claim 1, **characterized in that** the feeding circuit (61, 62, 53, 31, 64, 66) includes a feeding pad (61, 64) formed on that side of the extended board portion which faces the feeding portion of the antenna, the feeding pad being coupled with the feeding portion by capacitive coupling.

8. The terminal according to claim 1, **characterized in that** the feeding circuit (61, 62, 53, 31, 64, 66) includes:
a feeding pad (61, 64) configured to be formed on one side of the extended board portion; and
a conductive portion (62, 53, 31, 66) configured to couple the feeding pad with the feeding portion of the antenna by capacitive coupling.

9. The terminal according to claim 8, **characterized in that** the conductive portion (62, 53, 31, 66) is formed of a conductive elastic portion which is electrically connected to the feeding portion of the antenna and in contact with the feeding pad (61, 64).

10. The terminal according to claim 8, **characterized in that** the conductive portion (62, 53, 31, 66) includes a conductive elastic portion (66) which is bended at least once in a direction in which the antenna is sticked out or in another direction opposite to the direction.

11. The terminal according to claim 8, **characterized by** further comprising an antenna support member (51, 52) with which the antenna (30, 40) is supported on the casing, the member which is made of dielectric material.

12. The terminal according to claim 11, **characterized in that** the conductive portion (62, 53, 31, 66) includes a conductive elastic portion (64, 66) having a bottom end which is fixed to the antenna support member (51, 52) in a monolithic manner with a predetermined distance maintained with reference to the antenna, and a top end which is electrically connected to the feeding pad (61).

13. A mobile communication terminal **characterized by** comprising:
a circuit board (20) configured to have at least a radio communication circuit and be housed in a casing of the terminal;
an antenna (30, 40) configured to include a radiating portion located out of a upper portion of the casing and a feeding portion located inside the casing;
an extended board portion (22) configured to be extended in a direction in which the antenna is extended and be set in a position on the circuit board which is opposed to a position of the antenna;
a matching circuit (70, 71) configured to implement impedance-matching between the radio communication circuit and the antenna and be located on the extended board portion (22); and
a feeding circuit (61, 62, 53, 31, 64, 66) configured to feed high-frequency power to the feeding portion of the antenna (30, 40), the high-frequency power being output from the radio communication circuit via the matching circuit (70, 71).

14. A unit for use in a mobile communication terminal including an antenna with a radiating portion sticked out of a casing of the terminal and a feeding portion located inside the casing, **characterized by** comprising:
a circuit board (20) configured to have at least a radio communication circuit and be housed in a casing of the terminal;
an extended board portion (22) configured to be extended in a direction in which the antenna is extended and be set in a position on the circuit board which is opposed to a position of the antenna;
a matching circuit (70, 71) configured to implement impedance-matching between the radio communication circuit and the antenna and be located on the extended board portion (22); and
a feeding circuit (61, 62, 53, 31, 64, 66) configured to feed high-frequency power to the feeding portion of the antenna, the high-frequency power being output from the radio communication circuit via the matching circuit (70, 71).
